# EUROPEAN PATENT SPECIFICATION

(11) **EP 3 123 355 B1**
(45) Date of publication and mention of the grant of the patent: **20.03.2019**
(21) Application number: 14713428.2
(22) Date of filing: 24.03.2014
(51) Int. Cl.: G06K 9/22, G06K 9/00, G06F 17/00

(54) **SYSTEM COMPRISING AN AUDIO DEVICE AND A MOBILE DEVICE FOR DISPLAYING INFORMATION CONCERNING THE AUDIO DEVICE**
TRAGBARES ENDGERÄT UND VERFAHREN ZUR ANZEIGE AUF EINEM TRAGBAREN ENDGERÄT
TERMINAL MOBILE ET PROCÉDÉ D'AFFICHAGE SUR UN TERMINAL MOBILE

(43) Date of publication of application: 01.02.2017
(73) Proprietor: Sonova AG, 8712 Stäfa (CH)
(72) Inventor: MUELDER, Hans, CH-3184 Wuennewil (CH)
(74) Representative: Schwan Schorer & Partner mbB
(86) International application number: PCT/EP2014/055801
(87) International publication number: WO 2015/144192

(56) References cited:
- EP-A1- 1 965 344
- EP-A1- 2 256 650
- DE-A1-102006 000 556
- US-A1- 2009 237 546
- US-A1- 2010 033 430

## Description

The invention relates to a system comprising an audio device, such as a hearing instrument or an accessory device of a hearing instrument, and a mobile device, such as a smartphone, having a display for displaying information concerning the audio device; the invention also relates to a method of operating such system.

User guides and other support marketing tools of audio device products are often not read, while specific user questions typically need to be answered at specific, sometimes unexpected moments in time. Such questions may be related to normal usage when the user has to become familiar with the product, to trouble shooting, or to alternative or new products.

There may also occur cases in which the user has no questions but the product offers more options than known to the user, or that other information may be beneficial to the user. A convenient presentation of product information is particularly important for complex products having many different usage options.

EP 2 256 650 A1 relates to a mobile terminal having a display for displaying information of a manual or a repair guide of an object device and a camera for capturing an image of the object device to be repaired; the terminal is able to recognize the object device from an image taken by the camera and determines whether a respective manual or repair guide exists in the memory of the mobile terminal. A controller may obtain the manual or repair guide from an external server if the manual or repair guide does not exist in the memory. The mobile terminal may be a smartphone or similar device. Examples of the object device are a telephone system, a photo camera, a TV set or a HiFi system. Information obtained from the manual or repair guide may be displayed by means of an augmented reality program in such a manner that a certain instruction or information is displayed within an image of the object device taken by the camera of the mobile terminal.

EP 2 432 209 A1 relates to a mobile device, such as a smartphone, comprising a camera for capturing an image and a display for displaying the image and additional information about the image, wherein the information to be displayed is selected according to a classification of the object, such as with regard to its geographic location as determined from GPS-signals or the type of building as determined from analyzing the image of the object.

DE 10 2006 000 556 A1 relates to a mobile phone for displaying multimedia instruction manuals for certain devices, such as a DVD-recorder. EP1 965 344 A1 relates to remote object recognition from video data obtained by a camera of a mobile phone, wherein the respective image processing is carried out on a remote server.

It is an object of the invention to provide for a system comprising an audio device, wherein information related to the use of the audio device is presented to the user in a particularly convenient and efficient manner. It is a further object of the invention to provide for a corresponding method of operating such system.

According to the invention, these objects are achieved by a system as defined in claim 1 and a method as defined in claim 12.

The information is beneficial in that, by storing use data concerning the use of the audio device, transmitting such use data from the audio device to the mobile device and by selecting the information concerning the audio device to be displayed in the display of the mobile device according to the use situation and/or use history of the audio device as determined from the transmitted use data, information concerning the audio device can be presented to the user of the audio device in a personalized way, so that only information which is actually relevant to the user in a specific use situation is presented, without confusing or boring the user with information he or she does not need in the moment; in particular, such personalized presentation of information prevents the user from being bored with features or use cases or information the user already knows or which are not relevant in the current context or which are too complex at the specific moment in time for the user. Further, the user may be provided not only with use instructions but also with other relevant information in a personalized way, such as information concerning use, new features, updates, new products, background information, testimonials, links to forums and blogs etc.

Preferably, the mobile device comprises a camera and is adapted to identify the audio device and/or components of the audio device based on image data provided by the camera, in particular by analyzing the shape of the audio device or the respective component.

Alternatively or in addition, the audio device may be adapted to transmit identification data via the wireless communication interface to the mobile device.

The audio device typically is a hearing instrument device, a hearing assistance device, an auditory prosthesis device or an accessory device of such devices. According to one example, the audio device is a wireless microphone unit or a wireless audio signal streaming device.

Preferably, the audio device comprises at least one sensor, such as an accelerometer or a microphone, for determining a present use situation.

Preferably, the wireless communication interface is a Bluetooth interface.

Typically, the logged use data comprise at least one of the last use of the audio device, the present auditory scene as sensed by the audio device, the present use mode of the audio device, the connectivity with other devices, the type of interaction with other devices, and the type of other devices connected to the audio device.

Typically, the mobile device is a smartphone or a tablet computer and comprises an interface from external data base for obtaining information concerning the audio device.

Preferably, the mobile device comprises at least one sensor for determining the present use situation of the mobile device, such as a GPS sensor or a real-time clock, wherein the information concerning the audio device to be displaced, is selected not only according to the use situation and/or use history of the audio device as determined from the use data logged in the audio device, but also according to the determined present use situation of the mobile device and/or a history of determined use situations of the mobile device. Taking into account also use data of the mobile device may improve the personalized presentation of the information concerning the audio device, since the mobile device, on the one hand, is aware of which information already has been presented to a user in the past and, on the other hand, the mobile device typically is used in close proximity to the audio device, so that the use situations of the audio device and the mobile device typically are very similar or identical, such as with regard to the geographic position, the time, the date, the acoustic environment, the temperature, the humidity, etc.

Typically, the information displayed by the mobile device includes instruction videos, instruction pictures and text messages. Preferably, real-time images of the audio device taken by the camera of the mobile device may be combined with text messages concerning the use of the audio device in order to implement an augmented reality feature.

Further, information concerning the audio device to be displayed by the mobile device may include information concerning the status of the audio device or warning messages, such as service reminders, battery lifetime messages, firmware update reminders and device malfunction messages.

Hereinafter, examples of the invention will be illustrated by reference to the attached drawings, wherein:
- Fig. 1: is a schematic block diagram of an example of a system according to the invention; and

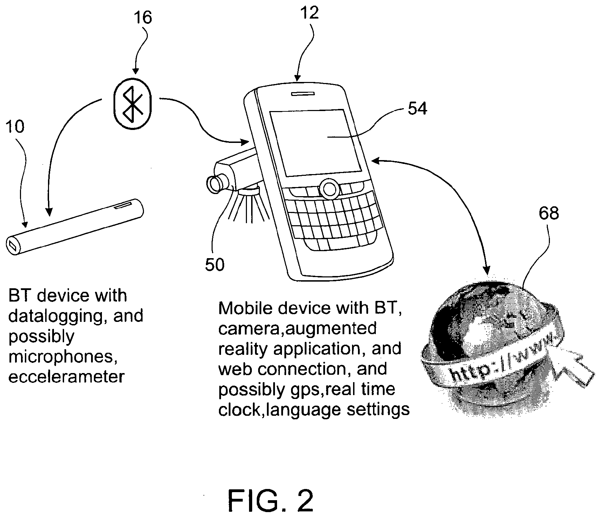

- Fig. 2: is a perspective view of an example of a system according to the invention.

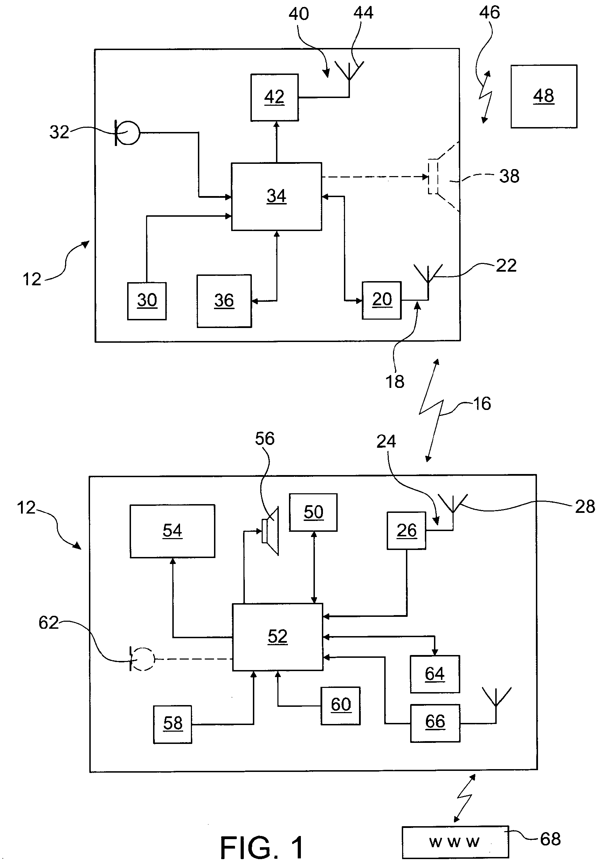

Fig. 1 is a block diagram of an example of a system according to the invention, comprising an audio device 10 and a mobile device 12, which may exchange data via a wireless data link 16 established by a wireless communication interface 18 of the audio device 10, comprising a transceiver 20 and an antenna 22, and a wireless communication interface 24 of the mobile device 12, comprising a transceiver 26 and an antenna 28.

The audio device 10 comprises at least one sensor for determining a present use situation, such as an accelerometer 30 and/or a microphone 32. The audio device 10 further comprises a signal processing unit 34 and a memory 36 which is connected to the signal processing unit 34 , the microphone 32, the memory 36 and the communication interface 18. The use situation sensors 30, 32 provide their signals to the data processing unit 34 which generates corresponding use data which are stored in the memory 36 in order to implement a data logging feature.

Depending on its type, the audio device 10 may include additional components, such as a loudspeaker or other audio output transducer 38 (indicated in dashed lines in Fig. 1) in case that the audio device 10 is a hearing instrument, a hearing assistance device or an auditory prosthesis device; in this case the data processing unit 34 would be designed to process the audio signals captured by the microphone 32 (or captured by additional microphones not shown in Fig. 1). In case that the audio device 10 is an accessory device, such as a wireless microphone, it may include a wireless interface 40 comprising a transceiver 42 and an antenna 44 for transmitting audio signals/audio data via a wireless link 46 to the (main) audio device 48, which may be a hearing instrument device, a hearing assistance device or an auditory prosthesis device (in case that the audio device 10 is a wireless microphone, the link 46 typically would be a 2.4 GHz digital link; in case that the audio device 10 is an audio streaming device, the link 46 typically would be an inductive link). Alternatively, the communication interfaces 18 and 40, which are shown as separate units in Fig. 1, may be implemented as a single communication interface.

The mobile device 12 comprises a camera 50, a data processing unit 52 and a display 54; typically, it will also include a loudspeaker 56. The mobile device 12 may also include sensors like a GPS sensor 58, a real-time clock 60 and a microphone 62 in order to determine a use situation of the mobile device 12. The mobile device 12 also may include a memory 64 and a communication interface 66 to an external database 68 containing information concerning the audio device 10. Typically, the database 68 is accessed via the internet, with the interface 66 typically being a wireless interface. The memory 64 may be used for storing information concerning the audio device 10 as retrieved from the database 68 and for storing use data concerning the use of the mobile device 12 according to the signals provided by the use situation sensors 58, 60, 62.

The mobile device 12 typically is a smartphone or a tablet computer and may be provided with a specific software (an "app") which may be the same for all users of the audio device 10, i.e. for all mobile devices 12 which are to be used with the audio device 10, including different types of mobile devices 12, or even for different audio devices 10. For example, the user may access the specific software by reading a QR code (which may be found, for example, on the package of the audio device 10) or a URL code or via a company website / web address or social media.

The specific software may trigger the camera 50 in order to take pictures of the audio device 10, and the data processing unit 52 will identify the audio device 10 or components of the audio device 10 (such as a certain button) based on image data provided by the camera 50, typically by analyzing the shape of the audio device 10 or the shape of the respective component.

Alternatively or in addition, in particular if different types of the audio device 10 look identical or very similar, the audio device 10 may transmit information concerning its type via the wireless communication link 16 to the mobile device 12.

As a next step, the mobile device 12 will read logged data concerning the use of the audio device 10 via the wireless link 16 from the audio device 10; in addition, status information may be obtained by the mobile device 12 via the wireless link 16 from the audio device 10.

As a further step, information concerning the audio device 10 is selected according to the use situation and/or use history of the audio device 10 as determined from the transmitted logged data (and transmitted present status information data). In addition, also data concerning the present use situation or history of use situations of the mobile device 12 (as provided by the sensors 58, 60, 62 and/or stored in the memory 64) may be taken into account when selecting the information concerning the audio device 10. The selected information then is displayed on the display 54, optionally together with sound provided by the speaker 56.

For example, an appropriate video or text will appear on the display 54 according to such information selection; in addition, corresponding audio information may be presented to the user by the audio device 10 which is supplied with respective audio data from the mobile device 12 via the link 16. The user may have the possibility to select the most interesting one if there is more than one relevant video or guide. For example, if it is the first time that the audio device 10 has been turned on, then a user guide or help video about how to switch on the audio device 10 may be shown on the display 54. Alternatively, if it is the first time that a connection has been detected or a new scenario is encountered, then the corresponding help video may be shown on the display 54. In particular, if a certain use case has not been encountered yet in the logged data (like connecting the audio device 10 to a multimedia source or connecting the audio device 10 to other device, like in a network of several wireless microphones, or using the audio device 10 in certain standard ways), the mobile device 12 will show the appropriate use case and explain to the user how and where to use the audio device 10 and where the potential benefit could be.

Apart from taking into account the use history of the audio device 10 by considering the logged data, the representation of the information by the mobile device 12 also may be steered by the actual context in which the audio device 10 is used, such as the acoustic landscape, the time of the day, the season, the GPS coordinates, or accelerometer data.

Preferably, the information concerning the audio device 10 is provided in an "augmented reality" manner, i.e. the reality on the display 56 (namely the image of the audio device 10 as taken by the camera 50) is augmented with additions in the form of text, videos, interactive elements, animations, sound samples, etc., with the augmented reality being modelled and customized in accordance with the use history and/or the present status of the audio device 10.

Further, the mobile device 12 could be used to inform the user about available firmware upgrades of the audio device 10 or to inform the user if something does not work properly, like reduced battery autonomy after a certain amount of charging cycles, and to advise the user to have the battery replaced.

Information available on the mobile device 12 may be used for further personalizing the setup of the audio device 10. For example, time triggered popups may appear on the mobile device 12 without manually starting the specific software concerning the audio device 10, which popups may provide, for example, news, information on the product, or start of a training session. In addition, GPS data obtained by the mobile device 12 and/or the language selection of the mobile device 12 may be used for automatically adjusting corresponding settings of the audio device 10.

Further, a user may be enabled to configure settings depending on a current mode of operation of the audio device 10 based on information provided by the mobile device 12. For example, when the audio device 10 is operating at a certain zoom mode or beamforming mode, the mobile device 12 may show the user corresponding setups, so that the user may change the setup within this mode. According to another example, when music is streamed to the audio device 10, the user may be shown the parameters related to music streaming, so that the user may configure the streaming accordingly.

Moreover, the mobile device 12 may provide the user with personalized information, based on the logged use data, concerning other products similar to the audio device 10.

The mobile device 12 also could provide for links to relevant websites, forums, testimonials, news, etc. in a personalized manner based on the logged use data. Further, seasonal information about how the audio device 10 may be used in summer, at Christmas, etc. may be provided by the mobile device 12 based on the present date.

In case that the mobile device 12 is connected via the interface 66 to the database 68, information can be updated at any time (with the information being stored in the memory 64 for off-line use of the mobile device 12).

The mobile device 12 also may provide for share buttons to share the augmented reality content on social media, so that other persons can see the content in a social media adapted format, and other persons can easily access the application. The mobile device 12 may provide for service reminders based on the serial number of the audio device 10 and the date of purchase. Further, the mobile device 12 may provide for information how to clean and care for the audio device 10.

While the logged use data is stored typically on the audio device, it may alternatively or in addition be stored on an external database (such as a server accessible via the internet). However, in this case there should be a secure connection between the user's mobile device 12 and the logged data on the server.

## Claims

1. A system comprising
an audio device (10) having a wireless communication interface (18) and a memory (36) for storing use data concerning the present or previous use of the audio device obtained by data logging; and
a mobile device (12) having
a wireless communication interface (24) for data exchange with the audio device,
a display (54) for displaying information concerning the audio device, and
a data processing unit (52) for selecting the information concerning the audio device to be displayed according to the use situation and/or use history of the audio device as determined from logged use data transmitted from the audio device via the wireless communication interface,
wherein the logged use data comprise at least one of the last use of the audio device, the present auditory scene as sensed by the audio device, the present use mode of the audio device, the connectivity with other devices (48), the type of interaction with other devices, and the type of other devices connected to the audio device.

2. The system of claim 1, wherein the mobile device (12) comprises a camera (50), the mobile device being adapted to identify the audio device (10) and/or components of the audio device based on image data provided by the camera, wherein the mobile device (12) is adapted to identify the audio device (10) by analyzing the shape of the audio device and to identify components of the audio device (10) by analyzing the shape of the components of the audio device.

3. The system of one of the preceding claims, wherein the audio device (10) is adapted to transmit identification data via the wireless communication interface (18, 24) to the mobile device (12).

4. The system of one of the preceding claims, wherein the audio device (10) is a hearing instrument device, hearing assistance device, an auditory prosthesis device or an accessory device of a hearing instrument device, a hearing assistance device, or an auditory prosthesis device, including a wireless microphone unit or wireless audio signal streaming device.

5. The system of one of the preceding claims, wherein the audio device (10) comprises at least one sensor (30, 32) for determining a present use situation, and wherein the at least one sensor comprises at least one of an accelerometer (30) and a microphone (32).

6. The system of one of the preceding claims, wherein the wireless communication interface (18, 24) is a Bluetooth interface.

7. The system of one of the preceding claims, wherein the mobile device (12) is a smartphone or a tablet computer.

8. The system of claim 5, wherein the mobile device (12) comprises an interface (66) to an external data base (68) for obtaining information concerning the audio device to be displayed, wherein the interface (66) is an internet access interface.

9. The system of one of the preceding claims, wherein the mobile device (12) comprises at least one sensor (58, 60, 62) for determining a present use situation of the mobile device, wherein the at least one sensor comprises at least one of a GPS sensor (58) and a real time clock (60), and wherein the data processing unit (52) is adapted to select the information concerning the audio device (10) to be displayed according to the use situation and/or use history of the audio device as determined from logged use data transmitted from the audio device via the wireless communication interface (18, 24) and the determined present use situation of the mobile device (12) and/or a history of determined use situations of the mobile device.

10. The system of one of the preceding claims, wherein the information concerning the audio device (10) to be displayed by the mobile device (12) includes at least one of: use instruction videos, use instruction pictures, text messages, information concerning the status of the audio device, a current mode of operation of the audio device, and warning messages including at least one of service reminders, battery lifetime messages, firmware update reminders, and device malfunction messages.

11. The system of one of the preceding claims, wherein the mobile device is adapted to display information concerning the audio device (10) simultaneously with a real-time image of the audio device obtained by a camera (50) of the mobile device (12).

12. A method of operating a system comprising an audio device (10) and a mobile device (12), the method comprising:
logging data concerning the present or previous use of the audio device and storing the logged data,
identifying, by the mobile device, the audio device,
accessing the logged data by the mobile device, retrieving, by the mobile device,
information concerning the audio device, selecting, by the mobile device, information concerning the audio device according to the use situation and/or use history of the audio device as determined from the logged data, and displaying, by the mobile device, the selected information concerning the audio device,
wherein the logged use data comprise at least one of the last use of the audio device, the present auditory scene as sensed by the audio device, the present use mode of the audio device, the connectivity with other devices (48), the type of interaction with other devices, and the type of other devices connected to the audio device.

13. The method of claim 12, wherein the logged data is stored in a memory (36) of the audio device, and the logged data is transmitted from the audio device to the mobile device (12) via a wireless communication link (16) or the logged data is stored in data base (68) external to the audio device (10), and the logged data is transmitted from the external data base to the mobile device (12).

14. The method of one of claims 12 and 13, wherein the audio device (10) is identified by taking an image of the audio device by a camera (50) of the mobile device (12) and analyzing the image of the audio device, wherein the information concerning the audio device (10) is retrieved from a database (68) via the internet, wherein a present use situation of the mobile device (12) is determined by the mobile device, and wherein the determined present use situation of the mobile device and/or a history of determined use situations of the mobile device is taken into account when selecting said information concerning the audio device (10).

15. The method of one of claims 12 to 14, wherein user of the audio device (10) is enabled to manually adjust a setting of the audio device concerning the present use situation based on information provided by the mobile device (12) concerning the present use situation of the audio device.

## Patentansprüche

1. System mit
einem Audiogerät (10) mit einer drahtlosen Kommunikationsschnittstelle (18) und einem Speicher (36) zum Speichern von Daten betreffend die gegenwärtige oder vorhergehende Verwendung des Audiogeräts, die mittels Datenaufzeichnung erhalten wurden; und
einem mobilen Gerät (12) mit
einer drahtlosen Kommunikationsschnittstelle (24) zum Datenaustausch mit dem Audiogerät,
einer Anzeige (54) zum Anzeigen von Informationen betreffend das Audiogerät, und
einer Datenverarbeitungseinheit (52) zum Auswählen der das Audiogerät betreffenden anzuzeigenden Informationen gemäß der Verwendungssituation und/oder der Verwendungshistorie des Audiogeräts gemäß von dem Audiogerät über die drahtlose Kommunikationsschnittstelle gesendeten aufgezeichneten Verwendungsdaten,
wobei die aufgezeichneten Verwendungsdaten die letzte Verwendung des Audiogeräts, die von dem Audiogerät erfasste gegenwärtige Audioumgebung, den gegenwärtigen Verwendungsmodus des Audiogeräts, die Verbindung mit anderen Geräten (48), die Art der Interaktion mit anderen Geräten, und/oder die Art von mit dem Audiogerät verbundenen anderen Geräten umfassen.

2. System gemäß Anspruch 1, wobei das mobile Gerät (12) eine Kamera (50) aufweist und ausgebildet ist, um das Audiogerät (10) und/oder Komponenten des Audiogeräts basierend auf von der Kamera gelieferten Bilddaten zu identifizieren, wobei das mobile Gerät (12) ausgebildet ist, um das Audiogerät (10) zu identifizieren, indem die Form des Audiogeräts analysiert wird, und um Komponenten des Audiogeräts (10) zu identifizieren, indem die Form der Komponenten des Audiogeräts identifiziert wird.

3. System gemäß einem der vorhergehenden Ansprüche, wobei das Audiogerät (10) ausgebildet ist, um Identifikationsdaten über die drahtlose Kommunikationsschnittstelle (18, 24) an das mobile Gerät (12) zu senden.

4. System gemäß einem der vorhergehenden Ansprüche, wobei es sich bei dem Audiogerät (10) um ein Hörgerät, ein Hörunterstützungsgerät, ein Hörprothesengerät oder ein Zubehörgerät eines Hörgeräts, eines Hörunterstützungsgeräts oder eines Hörprothesengeräts handelt, einschließlich einer drahtlosen Mikrofoneinheit oder eines drahtlosen Audiosignal-Streaming-Geräts.

5. System gemäß einem der vorhergehenden Ansprüche, wobei das Audiogerät (10) mindestens einen Sensor (30, 32) zum Bestimmen einer gegenwärtigen Verwendungssituation aufweist, und wobei der mindestens eine Sensor mindestens ein Accelerometer (30) und/oder ein Mikrofon (32) aufweist.

6. System gemäß einem der vorhergehenden Ansprüche, wobei es sich bei der drahtlosen Kommunikationsschnittstelle (18, 24) um eine Bluetooth-Schnittstelle handelt.

7. System gemäß einem der vorhergehenden Ansprüche, wobei es sich bei dem mobilen Gerät (10) um ein Smartphone oder einen Tablet-Computer handelt.

8. System gemäß Anspruch 5, wobei das mobile Gerät (12) eine Schnittstelle (66) zu einer externen Datenbank (68) zwecks Erhalten von anzuzeigenden Informationen betreffend das Audiogerät aufweist, wobei es sich bei der Schnittstelle (66) um eine Internet-Zugangsschnittstelle handelt.

9. System gemäß einem der vorhergehenden Ansprüche, wobei das mobile Gerät (12) mindestens einen Sensor (58, 60, 62) zum Bestimmen einer gegenwärtigen Verwendungssituation des mobilen Geräts aufweist, der einen GPS-Sensor (58) und/oder eine Echtzeituhr (60) aufweist, und wobei die Datenverarbeitungseinheit (52) ausgebildet ist, um die anzuzeigenden Informationen betreffend das Audiogerät (10) gemäß der Verwendungssituation und/oder der Verwendungshistorie des Audiogeräts, wie sie von aufgezeichneten Verwendungsdaten, die von dem Audiogerät über die drahtlose Kommunikationsschnittstelle (18, 24) gesendet wurden, bestimmt wurde bzw. wurden, gemäß der bestimmten Verwendungssituation und/oder der Verwendungshistorie des Audiogeräts und gemäß der bestimmten gegenwärtigen Verwendungssituation des mobilen Geräts (12) und/oder einer Historie von bestimmten Verwendungssituationen des mobilen Geräts auszuwählen.

10. System gemäß einem der vorhergehenden Ansprüche, wobei die von dem mobilen Gerät (12) anzuzeigenden Informationen betreffend das Audiogerät Bedienhinweisvideos, Bedienhinweisbilder, Textnachrichten, Informationen betreffend den Status des Audiogeräts, einen gegenwärtigen Verwendungsmodus des Audiogeräts, und/oder Warnnachrichten einschließlich Serviceerinnerungen, Batterielebensdauernachrichten, Firmware-Update-Erinnerungen und/oder Gerätfehlfunktionsnachrichten beinhalten.

11. System gemäß einem der vorhergehenden Ansprüche, wobei das mobile Gerät ausgebildet ist, um Informationen betreffend das Audiogerät gleichzeitig mit einem mittels einer Kamera (50) des mobilen Geräts (12) erhaltenem Echtzeitbild des Audiogeräts anzuzeigen.

12. Verfahren zum Betreiben eines Systems mit einem Audiogerät (10) und einem mobilen Gerät (12), wobei:
Daten betreffend die gegenwärtige oder frühere Verwendung des Audiogeräts aufgezeichnet werden und die aufgezeichneten Daten gespeichert werden,
mittels des mobilen Geräts das Audiogerät identifiziert wird,
von dem mobilen Gerät auf die aufgezeichneten Daten zugegriffen wird, von dem mobilen Gerät Informationen betreffend das Audiogerät abgerufen werden, von dem mobilen Gerät Informationen betreffend das Audiogerät gemäß der Verwendungssituation und/oder Verwendungshistorie des Audiogeräts gemäß den aufgezeichneten Daten ausgewählt werden, und von dem mobilen Gerät die ausgewählten Informationen betreffend das Audiogerät angezeigt werden,
wobei die aufgezeichneten Verwendungsdaten die letzte Verwendung des Audiogeräts, die von dem Audiogerät erfasste gegenwärtige Hörumgebung, den gegenwärtigen Verwendungsmodus des Audiogeräts, die Verbindung mit anderen Geräten (48), die Art der Interaktion mit anderen Geräten, und/oder die Art von mit dem Audiogerät verbundenen anderen Geräten umfassen.

13. Verfahren gemäß Anspruch 12, wobei die aufgezeichneten Daten in einem Speicher (36) des Audiogeräts gespeichert werden und von dem Audiogerät über eine drahtlose Kommunikationsverbindung (16) zu dem mobilen Gerät (12) gesendet werden oder in einer bezüglich des Audiogeräts (10) externen Datenbank (68) gespeichert werden und die aufgezeichneten Daten von der externen Datenbank zu dem mobilen Gerät (12) gesendet werden.

14. Verfahren gemäß einem der Ansprüche 12 und 13, wobei das Audiogerät (10) identifiziert wird, indem ein Bild des Audiogeräts von einer Kamera (50) des mobilen Geräts (12) aufgenommen wird und das Bild des Audiogeräts analysiert wird, wobei die Information betreffend das Audiogerät (10) von einer Datenbank (68) über das Internet abgerufen wird, wobei eine gegenwärtige Verwendungssituation des mobilen Geräts (12) von dem mobilen Gerät bestimmt wird, und wobei die bestimmte gegenwärtige Verwendungssituation des mobilen Geräts und/oder eine Historie von bestimmten Verwendungssituationen des mobilen Geräts berücksichtigt werden, wenn die Informationen betreffend das Audiogerät (10) ausgewählt werden.

15. Verfahren gemäß einem der Ansprüche 12 bis 14, wobei ein Nutzer des Audiogeräts (10) befugt ist, eine Einstellung des Audiogeräts betreffend die gegenwärtige Verwendungssituation basierend auf von dem mobilen Gerät (12) gelieferten Informationen betreffend die gegenwärtige Verwendungssituation des Audiogeräts manuell einzustellen.

## Revendications

1. Système comprenant
un dispositif audio (10) ayant une interface de communication sans fil (18) et une mémoire (36) pour stocker des données d'utilisation concernant l'utilisation actuelle ou précédente du dispositif audio obtenues par enregistrement de données ; et
un dispositif mobile (12) ayant
une interface de communication sans fil (24) pour l'échange de données avec le dispositif audio,
un dispositif d'affichage (54) pour afficher des informations concernant le dispositif audio, et
une unité de traitement de données (52) pour sélectionner les informations concernant le dispositif audio à afficher en fonction de la situation d'utilisation et/ou de l'historique d'utilisation du dispositif audio, déterminés à partir de données d'utilisation enregistrées transmises du dispositif audio sur l'interface de communication sans fil,
dans lequel les données d'utilisation enregistrées comprennent au moins l'un parmi la dernière utilisation du dispositif audio, la scène auditive actuelle telle que détectée par le dispositif audio, le mode d'utilisation actuel du dispositif audio, la connectivité avec d'autres dispositifs (48), le type d'interaction avec d'autres dispositifs et le type d'autres dispositifs connectés au dispositif audio.

2. Système selon la revendication 1, dans lequel le dispositif mobile (12) comprend une caméra (50), le dispositif mobile étant conçu pour identifier le dispositif audio (10) et/ou des composants du dispositif audio sur la base de données d'image fournies par la caméra, dans lequel le dispositif mobile (12) est conçu pour identifier le dispositif audio (10) en analysant la forme du dispositif audio et pour identifier des composants du dispositif audio (10) en analysant la forme des composants du dispositif audio.

3. Système selon l'une des revendications précédentes, dans lequel le dispositif audio (10) est conçu pour transmettre des données d'identification sur l'interface de communication sans fil (18, 24) au dispositif mobile (12).

4. Système selon l'une des revendications précédentes, dans lequel le dispositif audio (10) est un instrument auditif, un appareil d'aide à l'audition, un appareil de prothèse auditive ou un dispositif accessoire d'un instrument auditif, d'un appareil d'aide à l'audition ou d'un d'appareil de prothèse auditive, y compris une unité à microphone sans fil ou un dispositif de diffusion en continu d'un signal audio d'un système sans fil.

5. Système selon l'une des revendications précédentes, dans lequel le dispositif audio (10) comprend au moins un capteur (30, 32) pour déterminer une situation d'utilisation actuelle, et dans lequel le ou les capteurs comprennent au moins un dispositif parmi un accéléromètre (30) et un microphone (32).

6. Système selon l'une des revendications précédentes, dans lequel l'interface de communication sans fil (18, 24) est une interface Bluetooth.

7. Système selon l'une des revendications précédentes, dans lequel le dispositif mobile (12) est un smartphone ou une tablette.

8. Système selon la revendication 5, dans lequel le dispositif mobile (12) comprend une interface (66) avec une base de données externe (68) pour obtenir des informations concernant le dispositif audio à afficher, dans lequel l'interface (66) est une interface d'accès à l'Internet.

9. Système selon l'une des revendications précédentes, dans lequel le dispositif mobile (12) comprend au moins un capteur (58, 60, 62) pour déterminer une situation d'utilisation actuelle du dispositif mobile, dans lequel le ou les capteurs comprennent au moins un dispositif parmi un capteur GPS (58) et une horloge en temps réel (60), et dans lequel l'unité de traitement de données (52) est conçue pour sélectionner les informations concernant le dispositif audio (10) à afficher en fonction de la situation d'utilisation et/ou de l'historique d'utilisation du dispositif audio déterminés à partir de données d'utilisation enregistrées transmises depuis le dispositif audio sur l'interface de communication sans fil (18, 24) et de la situation d'utilisation actuelle déterminée du dispositif mobile (12) et/ou d'un historique de situations d'utilisation déterminées du dispositif mobile.

10. Système selon l'une des revendications précédentes, dans lequel les informations concernant le dispositif audio (10) à afficher par le dispositif mobile (12) comprennent au moins l'un des éléments suivants: vidéos d'instructions d'utilisation, images d'instructions d'utilisation, messages de texte, informations concernant l'état du dispositif audio, un mode de fonctionnement actuel du dispositif audio et des messages d'avertissement comprenant au moins l'un parmi des rappels concernant la maintenance, des messages sur la durée de vie de la batterie, des rappels de mise à jour du micrologiciel, et des messages de dysfonctionnement du dispositif.

11. Système selon l'une des revendications précédentes, dans lequel le dispositif mobile est conçu pour afficher des informations concernant le dispositif audio (10) simultanément avec une image en temps réel du dispositif audio obtenue par une caméra (50) du dispositif mobile (12).

12. Procédé d'exploitation d'un système comprenant un dispositif audio (10) et un dispositif mobile (12), le procédé comprenant :
l'enregistrement de données concernant l'utilisation actuelle ou précédente du dispositif audio et le stockage des données enregistrées,
l'identification, par le dispositif mobile, du dispositif audio,
l'accès aux données enregistrées par le dispositif mobile, la recherche, par le dispositif mobile, d'informations concernant le dispositif audio, la sélection, par le dispositif mobile, d'informations concernant le dispositif audio en fonction de la situation d'utilisation et/ou de l'historique d'utilisation du dispositif audio déterminés à partir des données enregistrées et l'affichage, par le dispositif mobile, des informations sélectionnées concernant le dispositif audio,
dans lequel les données d'utilisation enregistrées comprennent au moins l'un parmi la dernière utilisation du dispositif audio, la scène auditive actuelle telle que détectée par le dispositif audio, le mode d'utilisation actuel du dispositif audio, la connectivité avec d'autres dispositifs (48), le type d'interaction avec d'autres dispositifs et le type d'autres dispositifs connectés au dispositif audio.

13. Procédé selon la revendication 12, dans lequel les données enregistrées sont stockées dans une mémoire (36) du dispositif audio et les données enregistrées sont transmises du dispositif audio au dispositif mobile (12) par une liaison de communication sans fil (16) ou les données enregistrées sont stockées dans une base de données (68) externe au dispositif audio (10), et les données enregistrées sont transmises de la base de données externe au dispositif mobile (12).

14. Procédé selon l'une des revendications 12 et 13, dans lequel le dispositif audio (10) est identifié en prenant une image du dispositif audio par une caméra (50) du dispositif mobile (12) et en analysant l'image du dispositif audio, dans lequel les informations concernant le dispositif audio (10) sont extraites d'une base de données (68) sur l'Internet, dans lequel une situation d'utilisation actuelle du dispositif mobile (12) est déterminée par le dispositif mobile, et dans lequel la situation d'utilisation actuelle déterminée du dispositif mobile et/ou un historique de situations d'utilisation déterminées du dispositif mobile sont pris en compte lors de la sélection desdites informations concernant le dispositif audio (10) .

15. Procédé selon l'une des revendications 12 à 14, dans lequel un utilisateur du dispositif audio (10) est habilité à ajuster manuellement un réglage du dispositif audio concernant la situation d'utilisation actuelle sur la base d'informations fournies par le dispositif mobile (12) concernant la situation d'utilisation actuelle du dispositif audio.
